# EUROPÄISCHE PATENTSCHRIFT

(11) **EP 3 781 342 B1**
(45) Veröffentlichungstag und Bekanntmachung des Hinweises auf die Patenterteilung: **13.09.2023**
(21) Anmeldenummer: 19718353.6
(22) Anmeldetag: 16.04.2019
(51) Int. Cl.: B23B 51/02, B23B 51/06

(54) **BOHRWERKZEUG MIT VERBESSERTER SCHMIERUNG**
DRILLING TOOL WITH IMPROVED LUBRICATION
OUTIL DE FORAGE À LUBRIFICATION AMÉLIORÉE

(30) Priorität: 18.04.2018 DE 102018205938
(43) Veröffentlichungstag der Anmeldung: 24.02.2021
(73) Patentinhaber: MAPAL Fabrik für Präzisionswerkzeuge Dr. Kress KG, 73431 Aalen (DE)
(72) Erfinder: KRENZER, Ulrich, 87787 Wolfertschwenden (DE); TOPAL, Serkan, 89257 Illertissen (DE)
(74) Vertreter: Kordel, Mattias
(86) Internationale Anmeldenummer: PCT/EP2019/059863
(87) Internationale Veröffentlichungsnummer: WO 2019/201962

(56) Entgegenhaltungen:
- EP-A1- 2 113 325
- WO-A1-2005/030418
- WO-A2-2011/090551
- DE-A1-102006 003 687
- DE-A1-102006 028 765
- DE-U1-202005 020 829
- US-A1- 2015 314 378

## Beschreibung

Die vorliegende Erfindung betrifft ein Bohrwerkzeug zum Herstellen von Bohrungen, besonders zum Vollbohren, das heißt besonders Wendelbohrer vor allem in Form von Vollhartmetallbohrern, mit einem hinteren Bohrerschaft zur Aufnahme des Werkzeugs und einer vorderen Spitze oder Bohrerstirn mit einer oder mehreren geometrisch definierten Schneiden, besonders aus Hartmetall oder HSS, mindestens einer Spannut und mindestens zweier sich an der Umfangsfläche des Bohrwerkzeugs axial erstreckender Führungsfasen. Die Erfindung stellt Mittel bereit, welche beim Schneidvorgang die Mantelreibung zwischen rotierendem Bohrwerkzeug und der Wand der Bohrung vermindern, und insbesondere den Verschleiß am Bohrerumfang und insbesondere an den Führungsfasen reduzieren.

Bohrwerkzeuge, insbesondere Wendelbohrer wie Vollhartmetallbohrer, haben üblicherweise eine Spitze mit einer oder mehreren geometrisch definierten Hauptschneiden oder Querschneiden, welche bekanntermaßen bei Bewegung, insbesondere Rotation des Bohrwerkzeugs relativ zu dem Werkstück zur Herstellung einer insbesondere zylindrischen Bohrung geeignet sind, wobei die Schneiden dabei an dem Werkstück zerspanend Material abtragen um die Bohrung zu bilden. Die abgetragenen Späne können durch gattungsgemäß an dem Bohrwerkzeug ausgebildete Spannuten von der Bohrerspitze weggeleitet werden. Um einen hohen Arbeitsdurchsatz zu gewährleisten und den Verschleiß des Bohrwerkzeugs, besonders der Schneiden an der Stirn des Bohrers zu verringern, können solche Bohrwerkzeuge in Gegenwart von Kühlschmierstoffen (KSS) betrieben werden. Eingetragener Kühlschmierstoff reduziert dort die Reibung im Schneidvorgang und dabei entstehende Reibungswärme kann über den Kühlschmierstoff, der zum Bohrerschaft hin abfließt abgeführt werden. Kühlschmierstoffe können äußerlich, das heißt über das Bohrloch, oder aber über eine innere Kühlmittelzufuhr in den Bohrvorgang eingebracht werden. Für die innere Zufuhr können in dem Bohrwerkzeug Kühlmittelkanäle vorgesehen sein, welche dann insbesondere an der Bohrerstirn in unmittelbarer Nähe zu den Schneiden münden. In bekannten Bohrwerkzeugen zur Verwendung mit innerer Kühlmittelzufuhr ist vorgesehen, dass der weitaus überwiegende Anteil des zur Bohrerspitze geführten Kühlschmierstoffs über die Spannuten abfließt und dabei den Abtransport der entstehenden Späne unterstützt.

Zur Stabilisierung eines rotierenden Bohrwerkzeugs in der Bohrung gegenüber nachteiligen Pendelbewegungen, welche sich vor allem durch die beim Zerspanen an den Schneiden entstehenden Querkräfte ergeben, können bekanntermaßen an dem Umfang des Bohrwerkzeugs mindestens zwei sich axial erstreckende sogenannte Führungsfasen vorgesehen sein, die dabei an der Bohrungswand im Wesentlichen spielfrei anliegen. Durch diese Führungsfasen wird das Bohrwerkzeug in der Bohrung geführt und Pendelwirkungen unterdrückt. Insbesondere bei längeren Bohrern oder bei erhöhten Anforderungen an die Bohrungsqualität, besonders an die Koaxialität einer zylindrischen Bohrung, kann die Anzahl der Führungsfasen von mindestens zwei Fasen auf beispielsweise drei, vier oder sechs Fasen erhöht sein, um verbesserte radiale Führung des Werkzeuges zu ermöglichen. Die Führungsfase kann als Rundschlifffase dienen. Es können an Führungsfasen zusätzlich reibende und glättende Strukturen ausgebildet sein, um die Bohrungsqualität zu verbessern.

Nachteiligerweise sind solche Führungsfasen aufgrund der Mantelreibung zwischen Bohrer und Bohrungswand einem hohen Verschleiß ausgesetzt. Dies gilt insbesondere für das Bohren schwierig spanbarer Werkstoffe wie Titanlegierungen, Nickelbasislegierungen, austenitische rostfreie Stähle oder gehärteter Stähle. Ein Verschleiß am Bohrerumfang, das heißt besonders an diesen Führungsfasen, wirkt destabilisierend, Pendelbewegungen können auftreten, welche Reibung und Verschleiß weiter erhöhen, das Werkstück und die Bearbeitungsmaschine belasten und das Bohrergebnis signifikant verschlechtern. Eine Wiederaufarbeitung von Bohrern mit verschlissenen Führungsfasen ist aber praktisch nicht möglich. Derartige Bohrwerkzeuge mit Schneiden an der Bohrerstirn werden in der Praxis nur stirnseitig nachgeschliffen; ein Verschleiß am Bohrerumfang bleibt erhalten. Ein nachgeschliffener Bohrer bleibt daher in Bohrqualität hinter einem neuen Produkt zurück und muss letztlich ausgewechselt werden. Dieser Umstand setzt die Wirtschaftlichkeit des Bohrens einerseits und/oder die Bohrqualität andererseits herab und verringert damit auch die Möglichkeit der Nutzung teurer Werkzeugwerkstoffe.

Es zeigte sich, dass trotz der aktiven inneren Zuführung von Kühlschmierstoffen direkt an die Bohrerstirn die Mantelreibung der Führungsfasen an der Bohrungswand nicht oder nur unzureichend vermindert werden kann. Dies ist besonders problematisch bei Bohrwerkzeugen mit mehr als zwei Führungsfasen. Zum Teil erreicht der eingetragene Kühlschmierstoff die Kontaktflächen der Führungsfasen an der Bohrungswand gar nicht, denn bei bekannten Bohrwerkzeugen ist vor allem vorgesehen, dass der Hauptstrom des Kühlschmierstoffes von der Bohrerstirn über die Spannuten abfließt.

Es ist wünschenswert, solche gattungsgemäßen Bohrwerkzeuge, insbesondere Wendelbohrer, die zum Betrieb mit Kühlschmierstoffen geeignet und vorgesehen sind, so weiterzuentwickeln, dass eine Reduzierung der Reibung an den Führungsfasen am Umfang des Bohrers, das heißt der Mantelreibung zwischen Bohrer und Bohrungswand, und damit eine Verschleißminderung an dem Bohrwerkzeug erreicht werden kann.

Aus der WO 2011/090551 A2 ist ein Bohrwerkzeug gemäß dem Oberbegriff des Anspruchs 1 bekannt.

Aus der DE 10 2016 113 348 A1 sind Wendelbohrer zum Betrieb mit innerer Kühlstoffzufuhr beschrieben, worin Vertiefungen an den Freiflächen an der Bohrerstirn ausgebildet sind, welche die Verteilung von Kühlschmierstoff aus den dort einmündenden Kühlkanälen ermöglichen. Es soll so die Kühlung und Schmierung an der Bohrerspitze verbessert werden. Eine verbesserte Kühlung am Umfang des Bohrwerkzeugs oder Verringerung der Reibung an den Führungsphasen ist weder vorgesehen, noch wird diese durch die dort offenbarten Maßnahmen erreicht.

Der Erfindung lag daher das technische Problem zugrunde, ein Bohrwerkzeug zur Herstellung von Bohrungen, insbesondere unter Einsatz von Kühlschmierstoff, bereitzustellen, welches im Betrieb eine verminderte Reibung an den Führungsfasen aufweist und damit geringeren Verschleiß am Umfang des Bohrwerkzeugs erzeugt.

Das technische Problem wird gelöst durch den Gegenstand des unabhängigen Anspruchs 1; vorteilhafte Ausgestaltungen ergeben sich aus den abhängigen Ansprüchen. Das Problem wird insbesondere gelöst durch die Bereitstellung eines Bohrwerkzeugs, insbesondere eines Bohrers, besonders eines Wendelbohrers ("Spiralbohrer") mit schraubenförmigen Nuten ("Spiralnuten"), geeignet und vorgesehen zum Herstellen von Bohrungen unter Verwendung von Kühlschmierstoff zur Kühlung und Schmierung des Bohrwerkzeugs. Unter "Bohrung" wird dabei in erster Linie und bevorzugt die Vollbohrung in das Vollmaterial des Werkstücks verstanden, besonders die Bohrung eines Sacklochs.

Dieses Bohrwerkzeug weist einen Bohrerschaft und an dem gegenüberliegenden Ende eine Bohrerstirn auf. Die Bohrerstirn weist eine oder mehrere Hauptschneiden mit Freiflächen auf. Besonders sind mindestens zwei Hauptschneiden vorgesehen. Außerdem weist das Bohrwerkzeug mindestens eine offene, sich von der Bohrerstirn in axialer Richtung des Bohrwerkzeugs zu dem Bohrerschaft hin erstreckende Spannut zum Abtransport von durch den Zerspanungsvorgang entstehenden Spänen auf. Die mindestens eine Spannut ist besonders schraubenförmig um das Bohrwerkzeug angeordnet ("Spiralnut"). Besonders sind zwei oder mehrere Spannuten vorgesehen.

Weiter ist in dem Bohrwerkzeug mindestens ein innerer Kühlkanal vorgesehen, welcher geeignet und dazu bestimmt ist, Kühlschmierstoff von dem Bohrerschaft zu der Bohrerstirn hinzuleiten ("innere Kühlmittelzufuhr").

Weiter weist das Bohrwerkzeug an seiner Umfangsfläche mindestens zwei, besonders drei oder vier oder mehr, sich in dessen axialer Richtung erstreckende, sich insbesondere geometrisch zweckmäßig gegenüberliegende Führungsfasen auf. Diese werden hierin als "primäre Führungsfasen" bezeichnet. Zu mindestens einer dieser primären Führungsfasen, bevorzugt zu allen vorhandenen primären Führungsfasen, ist erfindungsgemäß jeweils mindestens eine sekundäre Führungsfase ausgebildet, die sich entlang dieser primären Führungsfase erstreckt und zu dieser primären Führungsfase in Umfangsrichtung des Bohrwerkzeugs beabstandet ist. Gemäß der vorliegenden Erfindung wird unter einer "sekundären Führungsfase" eine zu einer primären (gattungsgemäßen) Führungsfase in Umfangsrichtung beabstandete weitere Führungsfase verstanden, die beim Schneidvorgang in relativer Rotationsrichtung des Bohrwerkzeugs der primären Führungsfase nachläuft. Die Führungsfasen sind bevorzugt schraubenförmig um das Bohrwerkzeug angeordnet.

Erfindungsgemäß ist zwischen dieser mindestens einen primären Führungsfase und der zugehörigen sekundären Führungsfase eine sogenannte Schmierstofftasche ausgebildet, die an dem Bohrwerkzeug, in Form einer Nut oder Vertiefung, von der primären und sekundären Führungsfase in radialer Richtung zurückgesetzt ist. Das heißt, erfindungsgemäß ist zwischen mindestens einem Paar aus primärer und sekundärer Führungsfase, welche sich an dem äußeren Umfang des Bohrwerkzeugs erstrecken, eine Vertiefung oder Tasche gebildet. Erfindungsgemäß erstreckt sich diese Schmierstofftasche von der Bohrerstirn ausgehend, in axialer Richtung des Bohrwerkzeugs in Richtung des Bohrerschafts. Die Schmierstofftasche ist geeignet und vorgesehen zur Aufnahme von Kühlschmierstoff, insbesondere von Kühlschmierstoff, welcher bei innerer Kühlmittelzufuhr im Bereich der Bohrerspitze oder Bohrerstirn des Bohrwerkzeugs austritt.

Bevorzugt endet die Schmierstofftasche in axialem Abstand in Richtung des Bohrerschafts blind und hat an ihrem Ende insbesondere keinen praktischen direkten Abfluss. Vielmehr ist vorgesehen, dass in die Schmierstofftasche im Bereich der Bohrerspitze, besonders an der Bohrerstirn, insbesondere aktiv eingeleitetes Kühlschmiermittel über die gesamte Erstreckung der Schmierstofftasche verteilt austritt, und zwar besonders und vor allem oder ausschließlich über die Führungsfasen hinweg, um so die Kontaktfläche zwischen Führungsfase und Bohrungswand mit Kühlschmiermittel zu benetzen.

Die Erfindung sieht also vor, dass zwischen mindestens einer ersten primären Führungsfase und einer zugehörigen dazu beabstandeten sekundären Führungsfase eine Schmierstofftasche ausgebildet ist, welche als Reservoir und axialen Leitkanal für Kühlschmierstoff entlang des Bohrwerkzeugs dient. Dabei ist vorgesehen, dass die Schmierstofftasche während des Schneidvorgangs Kühlschmierstoff aufnimmt und zumindest im Bereich ihrer axialen Erstreckung Kühlschmierstoff besonders zu den Führungsfasen hin leitet, um diese zu schmieren und zu kühlen, um damit die Mantelreibung der Führungsfasen am Umfang des Bohrers an der Bohrungswand maßgeblich zu vermindern.

Besonders ist dabei vorgesehen, dass die mindestens eine Schmierstofftasche sich zwar in axialer Richtung des Bohrwerkzeugs entlang erstreckt, aber, besonders im Gegensatz zu einer benachbart verlaufenden Spannut sich mit zunehmendem Abstand von der Bohrerstirn im Querschnitt verringert, das heißt verjüngt, und dabei blind endet. Unter dem "Querschnitt der Schmierstofftasche" wird gemäß dieser Erfindung die Querschnittsfläche (lichtes Maß) der Tasche, die primär als Nut oder Rille ausgebildet ist, quer zur axialen Ersteckung des Bohrwerkzeugs verstanden.

Alternativ oder zusätzlich ist dazu in einem gewissen axialen Abstand zu der Bohrerstirn ein Quersteg angeordnet, welche die axiale Erstreckung der Schmierstofftasche zu dem Bohrerschaft hin begrenzt und insbesondere die Schmierstofftasche gegenüber dem Bohrerschaft abdichtet. Der Quersteg kann besonders als eine insbesondere allein durch die Spannuten unterbrochene Ringfläche ausgebildet sein.

Ohne an die Theorie gebunden sein zu wollen, kommt es im Schneidvorgang, das heißt bei Rotation des Bohrwerkzeugs gegenüber dem Werkstück, zu Ausbildung eines Staudrucks des Kühlschmierstoffs. Dadurch wird Kühlschmierstoff aus der Schmierstofftasche aktiv zwischen die Führungsfasen und die Bohrungswand gepresst.. Insbesondere wenn, im Falle eines Wendelbohrers, die Schmierstofftasche zusammen mit primärer und sekundärer Führungsfase in einem Drallwinkel in Schraubenform um den Körper des Bohrwerkzeugs verlaufen, wirkt das Zusammenspiel von Rotation des Bohrwerkzeugs und Reibung an der Bohrungswand in Gegenwart von über den Kühlmittelkanal unter positivem Druck eingepumptem Kühlschmierstoff wie eine Verdrängerpumpe, welche aktiv Kühlschmierstoff zu den Führungsfasen hin drückt und entlang des axialen Verlaufs des Bohrwerkzeuges verteilt. Wird dadurch Kühlschmierstoff zwischen die Führungsfasen und die Bohrungswand gepresst, wird dort vorteilhafterweise ein hydrostatisches Radiallager gebildet, da der direkte Kontakt zwischen Führungsfasen und Bohrungswand weitestgehend durch den Schmierstoff unterbunden wird. Reibung und Verschleiß an den Führungsfasen wird signifikant reduziert.

In bevorzugten Ausführungen der Erfindung ist im Einzelnen vorgesehen, dass sich der Querschnitt der mindestens einen Schmierstofftasche von der Bohrerstirn aus in Richtung des Bohrerschafts hin verringert. Alternativ oder zusätzlich ist vorgesehen, dass die mindestens eine Schmierstofftasche in Richtung des Bohrerschafts durch mindestens einen Quersteg begrenzt ist. Dabei ist in beiden Varianten besonders vorgesehen, dass die Öffnung beziehungsweise das Volumen der Schmierstofftasche in einem bestimmten Abstand von der Bohrerstirn, begrenzt ist, das heißt blind endet. Dabei entspricht dieser Abstand vorzugsweise etwa dem Zwei- bis Vierfachen, insbesondere dem Zwei- bis Dreifachen oder dem Drei- bis Vierfachen des Durchmessers des Bohrwerkzeugs. Alternativ oder zusätzlich entspricht der Abstand maximal der halben Länge der axialen Erstreckung mindestens einer Spannut des Bohrwerkzeugs. Demgemäß ist also besonders vorgesehen, die erfindungsgemäßen Schmierstofftaschen nur bis maximal etwa zur Hälfte der axialen Erstreckung des Bohrwerkzeugs zu führen. Es hat sich besonders gezeigt, dass insbesondere in dem vorderen Bereich des Bohrers die Mantelreibung an der Bohrungswand am stärksten und der Bedarf für Reibungs- und Verschleißminderung am größten ist. Durch die Beschränkung der Erstreckung der Schmierstofftaschen auf diesen vorderen Bereich der Bohrers wird dort die erfindungsgemäß ermöglichte Versorgung der Führungsfasen mit Kühlschmierstoff besonders verbessert.

Auch um den Übertritt des Kühlschmiermittels aus der Schmierstofftasche an die Führungsfasen entlang der axialen Erstreckung des Bohrwerkzeugs zu vergleichsmäßigen, ist in bevorzugten Ausführungen vorgesehen, dass sich der Querschnitt der Schmierstofftasche (lichtes Maß) in Abstand von der Bohrerstirn vermindert, das heißt verjüngt, um insbesondere einen Massenabfluss des Kühlmittels und einen Druckabfall zu kompensieren. Je nach Funktion, Anwendungsgebiet und spezifischer Ausgestaltung des Bohrwerkzeugs kann im einfachsten Fall vorgesehen sein, dass sich der Querschnitt als Funktion des Abstands von der Bohrerstirn im Wesentlichen proportional, insbesondere stetig und monoton vermindert. In alternativer Ausgestaltung kann eine Funktion höherer Ordnung den Querschnitt der Schmiertasche zum Abstand von der Bohrerstirn bestimmen. Beispielsweise können dabei zusätzliche lokale Aufweitungen des Querschnitts (Aussackungen) der Schmierstofftasche vorgesehen sein, besonders bei spezifischen Geometrien der zu schmierenden Führungsfasen und/oder in Zusammenhang mit Stufen- oder Zonenbohrern.

In bevorzugter Ausgestaltung, alternativ oder zusätzlich, vorgesehen, dass die sekundäre Führungsfase gegen die primäre Führungsfase von dem äußeren Umfang des Bohrwerkzeugs in radialer Richtung zurückgesetzt ist. Spezifisch und bevorzugt ist die sekundäre Führungsfase, bezogen auf den Durchmesser des Bohrwerkzeugs auf der Höhe der Führungsfasen, gegenüber der primären Führungsfase um weniger als 30 µm, bevorzugt weniger als 25 µm, besonders bevorzugt weniger als 20 µm, bevorzug weniger als 15 µm, besonders aber um mindestens 5 µm oder mehr, mindestens 10 µm oder mehr, im Durchmesser reduziert. Das heißt, bezogen auf den radialen Abstand vom Mittelpunkt des runden Bohrwerkzeugs (Radius), ist die sekundäre Führungsfase gegenüber der primären Führungsfase jeweils um ein Maß, welches der Hälfte der vorgenannten Durchmesser entspricht, zurückgesetzt. Ohne an die Theorie gebunden sein zu wollen, wird vorteilhafterweise erreicht, dass Kühlschmierstoff aus der zwischen den beiden Führungsfasen liegenden Schmierstofftasche besonders über die sekundäre Führungsfase in der Weise eines Rakels auf die Bohrungswand aufgetragen werden kann. Insbesondere zwischen der sekundären Führungsfase und der Bohrungswand bildet sich so ein konstanter Flüssigkeitsfilm aus Kühlschmierstoff, welcher zumindest dort ein signifikanter reibungsvermindertes Radiallager zur Führung des Bohrwerkzeugs in der Bohrung bildet.

In besonderen Ausführungen ist unmittelbar an der primären Führungsfase eine zurückgesetzte oder angeschrägte primäre Nebenfase ausgebildet, die der eigentlichen primären Führungsfase bei bestimmungsgemäßer Rotation des Bohrwerkzeugs nacheilt. Sie dient insbesondere als Freifläche der als Rundschlifffase dienenden primären Fase. In dieser Nebenfase, die unmittelbar an die Schmierstofftasche grenzt und mit deren Volumen verbunden ist, sammelt sich gemäß der Erfindung Kühlschmierstoff und erlaubt eine verbesserte Verteilung von Kühlschmierstoff entlang der primären Führungsfase. In einer erfindungsgemäß bevorzugten Ausführung ist, alternativ oder insbesondere zusätzlich, unmittelbar an der sekundären Führungsfase eine zurückgesetzte oder angeschrägte sekundäre Nebenfase ausgebildet, die bei bestimmungsgemäßer Rotation des Bohrwerkzeugs der eigentlichen sekundären Führungsfase voreilt. Da diese Nebenfase unmittelbar an die Schmierstofftasche grenzt und mit deren Volumen verbunden ist, sammelt sich gemäß dieser besonders bevorzugten Ausführung der Erfindung Kühlschmierstoff. Dies ermöglicht nicht nur eine verbesserte Verteilung des Kühlschmierstoffs entlang der sekundären Führungsfase, sondern insbesondere eine verbesserte Zufuhr von Kühlschmierstoff aus der erfindungsgemäßen Schmierstofftasche in den Kontaktraum zwischen sekundärer Führungsfase und Bohrungswand. Die Ausbildung eines hydraulischen Radiallagers zwischen sekundärer Führungsfase und Bohrungswand wird so unterstützt. Ein bevorzugter Gegenstand der Erfindung ist daher ein Bohrwerkzeug, bei dem unmittelbar an der sekundären Führungsfase eine sekundäre Nebenfase ausgebildet ist.

Erfindungsgemäß ist vorgesehen, dass sich die Schmierstofftasche auch oder insbesondere ausschließlich zu der Freifläche der Bohrerstirn hin öffnet, insbesondere dort, wo der Kühlmittelkanal in die Bohrerstirn mündet, sodass im Schneidbetrieb aus dem Kühlmittelkanal austretender Kühlschmierstoff unmittelbar in die Schmierstofftasche fließen kann. Erfindungsgemäß ist dabei an der Bohrerstirn zwischen Schmierstofftasche und Kühlmittelkanal mindestens ein spezieller Verbindungskanal, beispielsweise in Form einer Vertiefung oder Anfasung, ausgebildet, zur verbesserten Überleitung von Kühlschmiermittel aus dem Kühlmittelkanal in die Schmierstofftasche. Der Verbindungskanal kann zum einen ein Polster von Kühlschmiermittel an der Bohrerstirn bilden, zum anderen unterstützt er erfindungsgemäß bevorzugt während der Rotationsbewegung beim Schneidvorgang ein aktives Pumpen von Kühlschmiermittel in die Schmierstofftasche, was den Staudruck in der Schmierstofftasche erhöhen kann.

Zusätzlich ist zur Versorgung der Schmierstofftasche mit Kühlschmierstoff in besonderen Ausgestaltungen vorgesehen, dass von dem Kühlmittelkanal zusätzlich mindestens ein Sekundärkanal abzweigt, der unmittelbar in die Schmierstofftasche selbst mündet. In dieser Ausführung kann daher vorteilhafterweise Kühlschmierstoff unmittelbar direkt in die Schmierstofftasche geleitet werden. Dies ist insbesondere bei hydrostatisch oder hydrodynamisch ungünstigen Verhältnissen an der Bohrerspitze sinnvoll und zweckmäßig, wenn dort sonst der überwiegende Teil des Kühlschmierstoffes aufgrund der Schneidengeometrie über die Spannut abfließen würde, ohne dass an der Bohrerspitze ausreichend Druck aufgebaut werden kann, um Kühlschmierstoff in die Schmierstofftasche zu leiten. Durch den mindestens einen Sekundärkanal, der eine direkte Verbindung mit dem Kühlmittelkanal besonders im Abstand zur Bohrerspitze herstellt, kann gewährleistet werden, dass die Schmierstofftasche ausreichend mit Kühlmittel versorgt und dort Staudruck aufgebaut werden kann. In dieser Ausführung ist außerdem bevorzugt vorgesehen, die primären, das heißt stirnseitigen, Kühlmittelkanalaustritte zu verschließen oder im Querschnitt zu verkleinern, um das Abfließen von Kühlschmiermittel über den mindestens einen Sekundärkanal unmittelbar in die Schmierstofftasche zu ermöglichen oder zu begünstigen.

In besonderen Ausgestaltungen ist alternativ oder zusätzlich vorgesehen, dass zwischen der mindestens einen Schmierstofftasche und einer sich in Umfangsrichtung dazu benachbart erstreckenden Spannut mindestens eine querend verlaufende Schmiernut ausgebildet ist, die geeignet und bestimmt ist zur Überleitung von Kühlschmiermittel aus der Schmierstofftasche in diese Spannut. Das heißt besonders, dass in der primären Führungsfase und alternativ oder zusätzlich in der sekundären Führungsfase, zwischen denen sich die Schmierstofftasche befindet, mindestens eine Schmiernut ausgebildet ist, welche eine Fluidverbindung, das heißt Flüssigkeitsbrücke, zwischen Schmierstofftasche und einer benachbart verlaufenden Spannut bildet. Die mindestens eine Schmiernut dient einerseits dem gezielten Übertritt von Kühlschmierstoff aus der Schmierstofftasche in die Spannut, um den Abtransport von Spänen zu ermöglichen oder zu erleichtern. Dies ist insbesondere sinnvoll für solche Ausführungen, worin der Kühlmittelkanal ausschließlich oder überwiegend in die Schmierstofftasche mündet und wobei vergleichsweise wenig oder überhaupt kein Kühlschmierstoff direkt an der Bohrerspitze in die Spannut fließen kann. In bevorzugter Ausführung sind mehrere solcher Schmiernuten ausgebildet, die in axialer Erstreckung der Spannut, beziehungsweise Führungsfase, zueinander, insbesondere regelmäßig beabstandet sind. In einer Variante nehmen die Abstände der Schmiernuten zueinander mit Abstand von der Bohrerstirn hin zu beziehungsweise ab, um die hydrostatischen und hydrodynamischen Druck- und Strömungsverhältnisse entlang des Bohrwerkzeugs zu kompensieren. Alternativ oder zusätzlich kann vorgesehen sein, dass der Querschnitt (lichtes Maß) der mehreren Schmiernuten entlang der Führungsfase mit Abstand zu der Bohrerspitze zunimmt beziehungsweise abnimmt, um die hydrostatischen und hydrodynamischen Druck- und Strömungsverhältnisse entlang des Bohrwerkzeugs zu kompensieren.

Weiter dient die mindestens eine Schmiernut an der Führungsfase, besonders eine Vielzahl von Schmiernuten auch dazu, im Bereich der Führungsfasen einen Flüssigkeitspolster aus Kühlschmierstoff zwischen Führungsfase und Bohrungswand zu bilden und beim Überströmen des Kühlschmiermittels von der Schmiermitteltasche in die benachbarte Spannut dynamisch aufrechtzuerhalten, um so ebenfalls ein hydrostatisches Radiallager zu bilden und den direkten Kontakt zwischen Führungsfase und Bohrungswand zu reduzieren, was wiederum die Reibung und Verschleiß an dieser Führungsfase reduziert.

Um insbesondere den Transport des Kühlschmierstoffs aus der Schmierstofftasche in die benachbarte Spannut zu erleichtern, ist insbesondere vorgesehen, dass die mindestens eine Schmiernut und die Spannut, besonders im Falle eines Wendelbohrers mit schraubenförmig verlaufenden Spannuten ("Spiralnut"), entgegengesetzte Drallrichtungen aufweisen. Bevorzugt ist dabei vorgesehen, dass der Drallwinkel des Bohrwerkzeugs, das heißt der Spannut, von 0° bis 35°, besonders 10° bis 25° oder bevorzugt etwa 30°, beträgt und der Drallwinkel der mindestens einen Schmiernut in ihrem Verlauf zwischen Schmierstofftasche und Spannut von -20° bis -70°, besonders -30° bis -50° beträgt.

Durch solche vorgenannten Anpassungen dieser Schmiernuten lässt sich eine für den jeweiligen Anwendungsfall optimale Balance von Mantel-Schmierung und Spanabtransport einstellen.

Alternativ oder zusätzlich ist vor allem zur Versorgung der mindestens einen Spannut mit Kühlschmiermittel an der Bohrerstirn ist erfindungsgemäß bevorzugt an dem Übergang zu der mindestens einen sekundären Führungsfasen zusätzlich eine radiale Anfasung, das heißt eine axial zurückgesetzte Ausnehmung, ausgebildet. Diese erlaubt eine zusätzliche Fluidverbindung zwischen Mündung des Kühlmittelkanals und der benachbarten Spannut und dient so der zusätzlichen Versorgung der Spannut mit Kühlschmiermittel.

Gegenstand der Erfindung ist schließlich auch die Verwendung einer zwischen einer primären Führungsfase und einer sekundären Führungsfase an einem erfindungsgemäßen Bohrwerkzeug ausgebildeten, insbesondere blind endenden, Schmierstofftasche zur Verminderung des Verschleißes des Bohrwerkzeugs, aufgrund von Mantelreibung zwischen Bohrer und Bohrungswand, besonders an den Führungsfasen des Bohrwerkzeugs. Damit verbunden ist die Verwendung zur Erhöhung der Standzeit des Bohrwerkzeugs. Damit verbunden ist die Verwendung zur Erhöhung der Schnittgeschwindigkeit oder des Vortrieb des Bohrwerkzeugs. Damit verbunden ist die Verwendung zur Erhöhung der Bohrqualität besonders beim Vollbohren.

Die Erfindung wird durch die nachfolgenden Figuren näher erläutert, ohne dass die dargestellten Ausführungen beschränkend zu verstehen wären. Dabei zeigen
- Figur 1: die Seitenansicht des vorderen Abschnitts eines gattungsgemäßen Bohrwerkzeugs mit konventioneller Geometrie,
- Figur 2: die Seitenansicht des vorderen Abschnitts eines erfindungsgemäßen Bohrwerkzeugs,
- Figur 3: eine stirnseitige Ansicht auf das Ausführungsbeispiel des Bohrwerkzeugs gemäß Figur 2.
- Figur 4: die Seitenansicht des vorderen Abschnitts eines weiteren Ausführungsbeispiels eines erfindungsgemäßen Bohrwerkzeugs,
- Figur 5: die Seitenansicht des vorderen Abschnitts eines weiteren Ausführungsbeispiels eines erfindungsgemäßen Bohrwerkzeugs, und
- Figur 6: die Seitenansicht des vorderen Abschnitts eines weiteren Ausführungsbeispiels eines erfindungsgemäßen Bohrwerkzeugs.

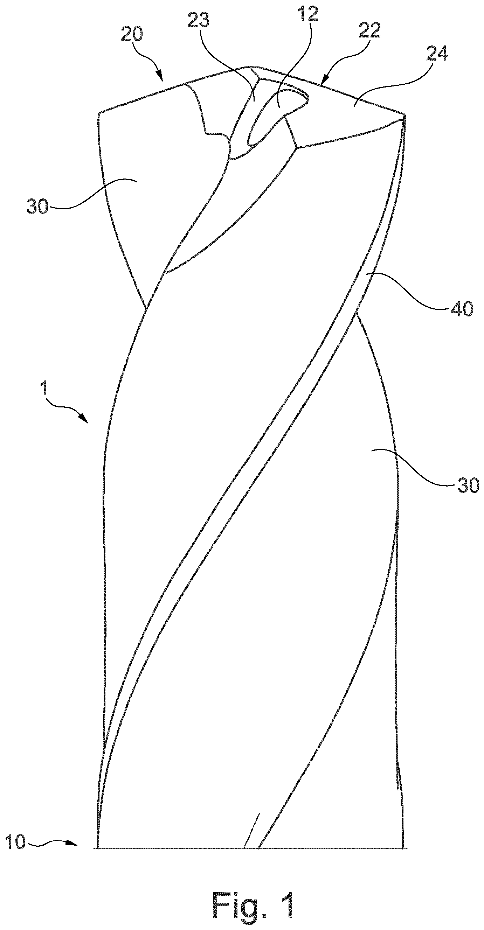

Figur 1 zeigt eine Seitenansicht eines vorderen Abschnitts eines gattungsgemäßen Bohrwerkzeugs mit konventioneller Geometrie: an der Stirn 20 dieses Bohrwerkzeugs 1 mindestens eine geometrisch bestimmte Hauptschneide 22 mit Freifläche 24 ausgebildet. In dem Bohrwerkzeug 1 verläuft mindestens ein Kühlmittelkanal 12, welcher an der Stirn 20 des Bohrwerkzeugs 1 an einer Anfasung 23 mündet, für eine gattungsgemäße innere Kühlmittelzufuhr. Mindestens eine Spannut 30 ist in Form einer Spiralnut, welche entlang der Axialerstreckung des Bohrwerkzeugs 1 verläuft, ausgebildet. Gattungsgemäß besitzt das Bohrwerkzeug 1 an seinem Schaft 10 im weiteren Verlauf eine Werkzeugaufnahme (nicht gezeigt). Die Spannut 30 ist zu dem Schaft 10 des Bohrwerkzeugs 1 hin geöffnet; Bohrspäne und Kühlschmiermittel sollen beim Schneidvorgang dort austreten. An dem äußeren Umfang des Bohrwerkzeugs 1 ist weiter mindestens eine Führungsfase 40 ausgebildet, die an der Wand der Bohrung anliegt, um das beim Schneidvorgang rotierende Bohrwerkzeug radial zu führen.

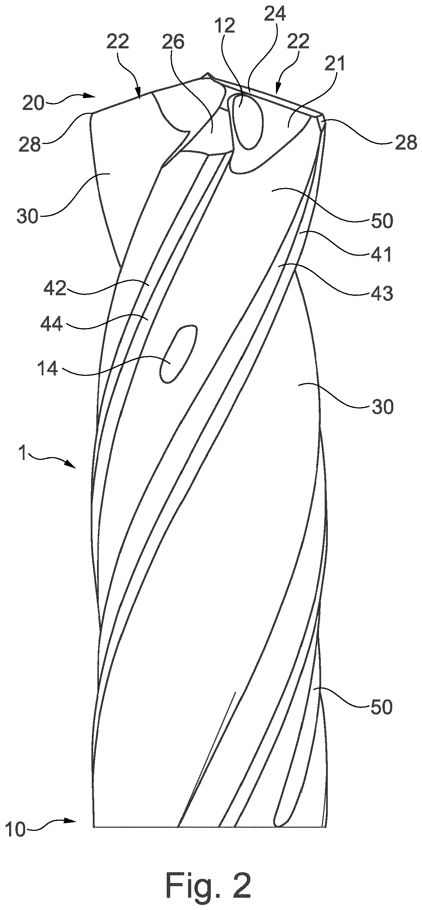

Figur 2 zeigt die Seitenansicht des vorderen Abschnitts eines erfindungsgemäßen Bohrwerkzeugs 1 mit zwei geometrisch bestimmten Hauptschneide 22 mit Freifläche 24. Gleiche und funktionsgleiche Elemente sind mit denselben Bezugszeichen versehen; es wird auf die vorangehende Figurenbeschreibung verwiesen. Eine als Spiralnut ausgeformte Spannut 30 ist zu dem Schaft 10 hin offen. In Abwandlung des bekannten Bohrwerkzeugs 1 gemäß Figur 1 weist das erfindungsgemäße Bohrwerkzeug 1 mindestens eine primäre Führungsfase 41 und eine dazu beabstandete sekundäre Führungsfase 42 auf. Zwischen den beiden schraubenförmig entlang des Bohrwerkzeugs 1 verlaufenden primären und sekundären Führungsfasen 41, 42 ist eine vom Umfang des Bohrers zurückgesetzte Schmiermitteltasche 50 ausgebildet. Die Schmiermitteltasche 50 ist mit dem Kühlmittelkanal 12 über einen Verbindungskanal 21 verbunden. Im axialen Verlauf in Richtung des Schafts 10 des Bohrwerkzeugs 1 verringert sich die Öffnung (lichtes Maß) der Schmiermitteltasche 50 und endet bei einem gewissen Abstand von der Bohrerstirn 20 blind. Weiter weißt diese Ausführung an der primären Führungsfase 41 eine davon schräg abfallende primäre Nebenfase 43 auf, die unmittelbar an die Schmierstofftasche 50 angrenzt. An der sekundären Führungsfase 42 ist ebenso eine davon schräg abfallende sekundäre Nebenfase 44 ausgebildet, Die sekündäre Nebenfase 44 grenzt unmittelbar an die Schmierstofftasche 50 an. In der Schmierstofftasche 50 endet, von der primären Mündung des Kühlmittelkanals 12 in axialer Richtung versetzt, ein Sekundärkanal 14, der als Bohrung in den inneren Kühlmittelkanal 12 ausgebildet ist und Kühlschmiermittel aus dem Kühlmittelkanal 12 unmittelbar in die Schmierstofftasche 50 fördern kann. An den Hauptschneiden sind in dem Übergang zu den primären Führungsfasen 41 radiale Anfasungen 28 ausgebildet. An der Bohrerstirn 20 sind erfindungsgemäß an dem Übergang zu den sekundären Führungsfasen 42 und sekundären Nebenfasen 44 radiale Anfasungen 26 ausgebildet. Diese erlauben eine zusätzliche Fluidverbindung zwischen Mündung des Kühlmittelkanals 12 und der Spannut 30 und dienen der zusätzlichen Versorgung der Spannut 30 mit Kühlschmiermittel.

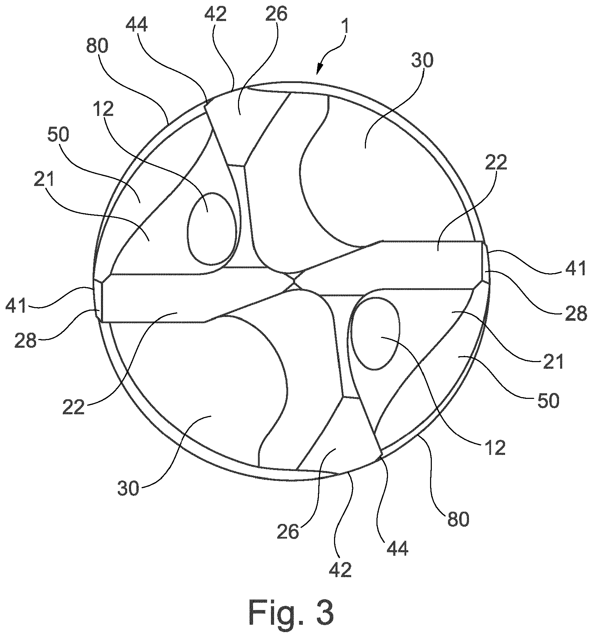

Figur 3 zeigt eine stirnseitige Ansicht auf das Ausführungsbeispiel des Bohrwerkzeugs 1 gemäß Figur 2 in einem Bohrloch 80. Gleiche und funktionsgleiche Elemente sind mit denselben Bezugszeichen versehen; es wird auf die vorangehende Figurenbeschreibung verwiesen.

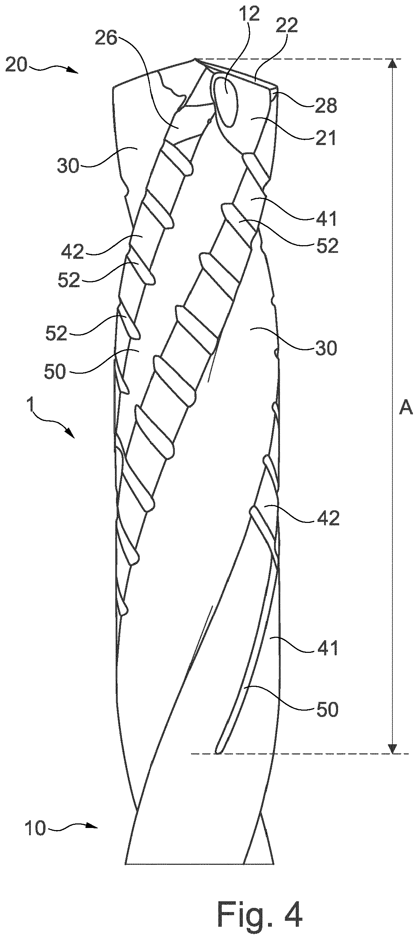

Figur 4 zeigt die Seitenansicht des vorderen Abschnitts eines weiteren Ausführungsbeispiels eines erfindungsgemäßen Bohrwerkzeugs 1, wobei zusätzlich an primärer und sekundärer Führungsfase 41, 42 zu den benachbart verlaufenden Spannuten 30 hin und dazu in Querrichtung verlaufende mehrere zueinander beabstandete Schmiernuten 52 ausgebildet sind. Gleiche und funktionsgleiche Elemente sind mit denselben Bezugszeichen versehen; es wird auf die vorangehende Figurenbeschreibung verwiesen. Die Schmiernuten 52 sind geeignet, in der Schmierstofftasche 50 vorhandenes Kühlschmiermittel in die benachbarten Spannuten 30 zu spülen und gleichzeitig im Bereich der primären und sekundären Führungsfasen 41, 42 ein Kühlschmiermittelpolster zu bilden. Weiter ist dargestellt, wie die zwischen primärer und sekundärer Führungsfase 41, 42 verlaufende Schmierstofftasche 50 sich im Verlauf in Richtung des Bohrerschafts 10 verjüngt und in Abstand A von der Bohrerstirn 20 blind endet.

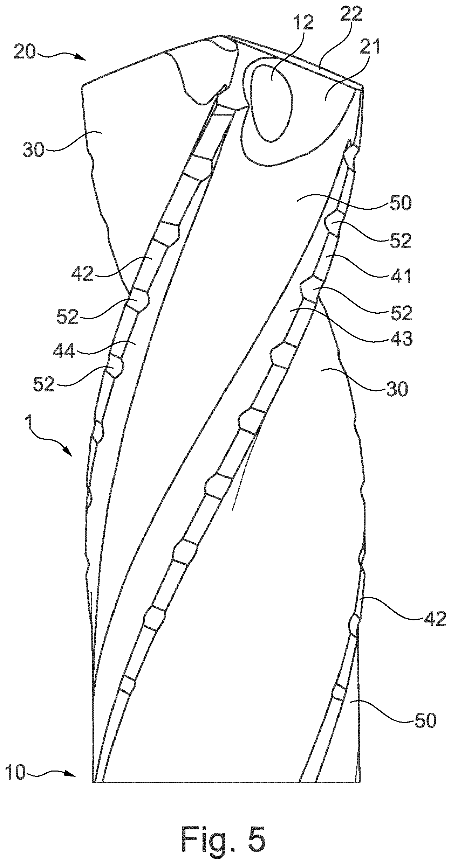

Figur 5 zeigt eine Seitenansicht des vorderen Abschnitts eines weiteren Ausführungsbeispiels eines erfindungsgemäßen Bohrwerkzeugs 1. Gleiche und funktionsgleiche Elemente sind mit denselben Bezugszeichen versehen; es wird auf die vorangehende Figurenbeschreibung verwiesen.

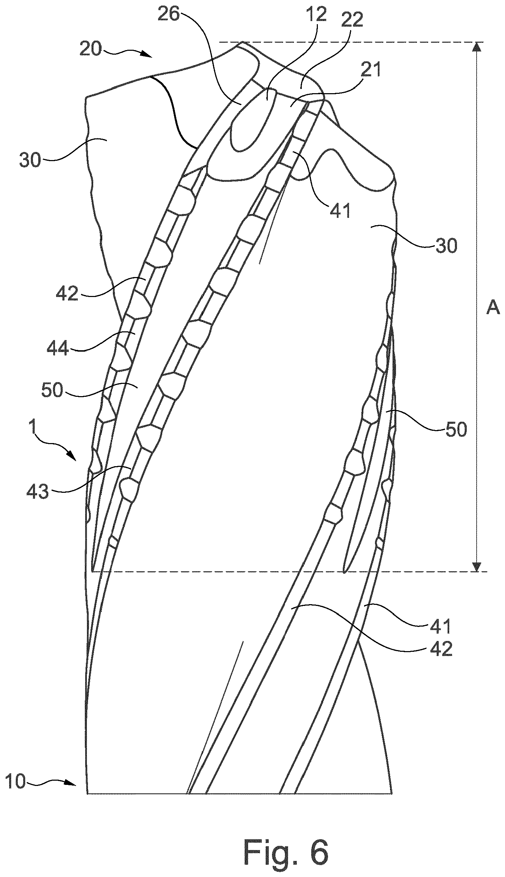

Schließlich zeigt Figur 6 eine Seitenansicht des vorderen Abschnitts eines weiteren Ausführungsbeispiels eines erfindungsgemäßen Bohrwerkzeugs 1. Gleiche und funktionsgleiche Elemente sind mit denselben Bezugszeichen versehen; es wird auf die vorangehende Figurenbeschreibung verwiesen. Die zwischen den beiden primären und sekundären Führungsfasen 41, 42 verlaufende Schmierstofftasche 50 verjüngt sich zum Bohrerschaft 10 hin und endet in Abstand A zur Bohrerstirn 20 blind.

## Patentansprüche

1. Bohrwerkzeug (1) zur Kühlschmierstoff unterstützten Herstellung von Vollbohrungen, aufweisend:
- einen Bohrerschaft (10),
- eine Bohrerstirn (20) mit daran ausgebildeten Hauptschneiden (22) und zugehörigen Freiflächen (24),
- mindestens eine sich von der Bohrerstirn (20) axial ersteckende zu dem Bohrerschaft (10) hin offene Spannut (30),
- mindestens einen Kühlmittelkanal (12) zur inneren Zufuhr von Kühlschmierstoff zu der Bohrerstirn (20), und
- mindestens zwei an der Umfangsfläche des Bohrwerkzeugs (1) angeordnete und sich axial ersteckende primäre Führungsfasen (41), wobei
zu mindestens einer der primären Führungsfasen (41) eine sekundäre Führungsfase (42) ausgebildet ist, die entlang dieser primären Führungsfase (41) verläuft und in Umfangsrichtung des Bohrwerkzeugs (1) von dieser beabstandet ist, wobei zwischen der primären Führungsfase (41) und der sekundären Führungsfase (42) eine von diesen Führungsfasen (41,42) radial zurückgesetzte Schmierstofftasche (50) zur Aufnahme von Kühlschmierstoff ausgebildet ist, wobei
- sich die Schmierstofftasche (50) zu der Freifläche (24) der Bohrerstirn (20) hin öffnet, wobei
- der Kühlmittelkanal (12) in die Bohrerstirn (20) mündet und dabei mit der Schmierstofftasche (50) zur Überleitung von Kühlschmiermittel aus dem Kühlmittelkanal (12) in die Schmierstofftasche (50) in Fluidverbindung steht, **dadurch gekennzeichnet, dass**
- an der Bohrerstirn (20) zwischen Schmierstofftasche (50) und Kühlmittelkanal (12) mindestens ein Verbindungskanal (21) ausgebildet ist, zur Überleitung von Kühlschmiermittel aus dem Kühlmittelkanal (12) in die Schmierstofftasche (50).

2. Bohrwerkzeug (1) nach Anspruch 1, wobei die Schmierstofftasche (50) in einem Abstand von der Bohrerstirn (20) in Richtung des Bohrerschafts (10) blind endet.

3. Bohrwerkzeug (1) nach Anspruch 1 oder 2, wobei sich die Schmierstofftasche (50) in Richtung des Bohrerschafts (10) im Querschnitt verringert.

4. Bohrwerkzeug (1) nach Anspruch 2 oder 3, wobei die Schmierstofftasche (50) in einem Abstand von der Bohrerstirn (20), welcher etwa dem 2-bis 4-Fachen des Durchmessers des Bohrwerkzeugs (1), maximal aber der halben Länge der axialen Erstreckung der mindestens einen Spannut (30) entspricht, endet.

5. Bohrwerkzeug (1) nach einem der vorstehenden Ansprüche, wobei die sekundäre Führungsfase (42) gegen die primäre Führungsfase (41) in radialer Richtung zurückgesetzt ist.

6. Bohrwerkzeug (1) nach einem der vorstehenden Ansprüche, wobei unmittelbar an der sekundären Führungsfase (42) eine sekundäre Nebenfase (44) ausgebildet ist.

7. Bohrwerkzeug (1) nach einem der vorstehenden Ansprüche, wobei von dem Kühlmittelkanal (12) mindestens ein Sekundärkanal (14) abzweigt, der unmittelbar in die Schmierstofftasche (50) mündet, zur Überleitung von Kühlschmiermittel aus dem Kühlmittelkanal (12) in die Schmierstofftasche (50).

8. Bohrwerkzeug (1) nach einem der vorstehenden Ansprüche, wobei zwischen der Schmierstofftasche (50) und der sich in Umfangsrichtung dazu benachbart erstreckenden Spannut (30) mindestens eine querend verlaufende Schmiernut (52) ausgebildet ist, zur Überleitung von Kühlschmiermittel aus der Schmierstofftasche (50) in die Spannut (30).

9. Bohrwerkzeug (1) nach Anspruch 8, wobei mehrere Schmiernuten (52) ausgebildet sind, die in axialer Erstreckung der Spannut (30) zu einander beabstandet sind.

10. Bohrwerkzeug (1) nach Anspruch 8 oder 9, wobei Schmiernut (52) und Spannut (30) entgegengesetzte Drallrichtungen aufweisen.

11. Bohrwerkzeug (1) nach Anspruch 10, wobei der Drallwinkel der Spannut (30) von 0° bis 35° beträgt und der Drallwinkel der Schmiernut (52) von -20° bis -70° beträgt.

12. Verwendung einer zwischen einer primären Führungsfase (41) und einer sekundären Führungsfase (42) an einem Bohrwerkzeug (1) gemäß einem der vorhergehenden Ansprüche ausgebildeten Schmierstofftasche (50) zur Verminderung von Reibung und Verschleiß des Bohrwerkzeugs (1) aufgrund von Mantelreibung zwischen Bohrer und Bohrungswand.

## Claims

1. Drilling tool (1) for cooling lubricant-supported machining of full bores, comprising:
- a drill shaft (10),
- a drill face (20) with main cutting edges (22) configured thereon and associated flank faces (24),
- at least one chipping groove (30) which is open towards the drill shaft (10) and extends axially from the drill face (20),
- at least one coolant channel (12) for the inside supply of cooling lubricant to the drill face (20), and
- at least two primary guiding chamfers (41) arranged on the circumferential surface of the drilling tool (1) and extending axially, wherein
a secondary guiding chamfer (42) is configured associated with at least one of the primary guiding chamfers (41), said secondary guiding chamfer (42) extending along this primary guiding chamfer (41) and being spaced therefrom in the circumferential direction of the drilling tool (1), wherein a lubricant pocket (50) for receiving cooling lubricant is configured between the primary guiding chamfer (41) and the secondary guiding chamfer (42), said lubricant pocket (50) being radially recessed from these guiding chamfers (41, 42), wherein
- the lubricant pocket (50) opens towards the flank face (24) of the drill face (20), wherein
- the coolant channel (12) opens into the drill face (20) and is in fluid communication with the lubricant pocket (50) for transferring cooling lubricant from the coolant channel (12) into the lubricant pocket (50), **characterised in that**
- at least one connecting channel (21) is configured on the drill face (20) between the lubricant pocket (50) and the coolant channel (12) for transferring cooling lubricant from the coolant channel (12) into the lubricant pocket (50).

2. Drilling tool (1) according to claim 1, wherein the lubricant pocket (50) ends blindly at a distance from the drill face (20) in the direction of the drill shaft (10).

3. Drilling tool (1) according to claim 1 or 2, wherein the lubricant pocket (50) reduces in cross-section in the direction of the drill shaft (10).

4. Drilling tool (1) according to claim 2 or 3, wherein the lubricant pocket (50) ends at a distance from the drill face (20) which corresponds to approximately 2 to 4 times the diameter of the drilling tool (1), but at most half the length of the axial extension of the at least one chipping groove (30).

5. Drilling tool (1) according to one of the preceding claims, wherein the secondary guiding chamfer (42) is set back against the primary guiding chamfer (41) in the radial direction.

6. Drilling tool (1) according to any one of the preceding claims, wherein a secondary side chamfer (44) is configured directly on the secondary guiding chamfer (42).

7. Drilling tool (1) according to one of the preceding claims, wherein at least one secondary channel (14) branches off from the coolant channel (12) and opens directly into the lubricant pocket (50), for transferring cooling lubricant from the coolant channel (12) into the lubricant pocket (50).

8. Drilling tool (1) according to one of the preceding claims, wherein at least one transversely extending lubrication groove (52) is configured between the lubricant pocket (50) and the chipping groove (30) extending adjacent thereto in circumferential direction, for transferring cooling lubricant from the lubricant pocket (50) into the chipping groove (30).

9. Drilling tool (1) according to claim 8, wherein a plurality of lubrication grooves (52) are configured which are spaced apart from one another in the axial extension of the chipping groove (30).

10. Drilling tool (1) according to claim 8 or 9, wherein lubrication groove (52) and chipping groove (30) comprise opposite torsion directions.

11. Drilling tool (1) according to claim 10, wherein the torsion angle of the chipping groove (30) is from 0° to 35° and the torsion angle of the lubrication groove (52) is from -20° to -70°.

12. Use of a lubricant pocket (50) configured between a primary guiding chamfer (41) and a secondary guiding chamfer (42) on a drilling tool (1) according to any one of the preceding claims for reducing friction and wear of the drilling tool (1) due to skin friction between the drill bit and the bore wall.

## Revendications

1. Outil de perçage (1) destiné à la production, facilitée par un lubrifiant de refroidissement, de perçages complets, présentant :
- une tige de foret (10),
- une pointe de foret (20) doté d'arêtes de coupe principales (22) et des surfaces libres correspondantes (24) formées sur celle-ci,
- au moins une rainure à copeaux (30) ouverte s'étendant axialement depuis la pointe de foret (20) vers la tige de foret (10),
- au moins un canal de liquide de refroidissement (12) destiné à une alimentation interne de la pointe de foret (20) en lubrifiant de refroidissement, et
- au moins deux chanfreins de guidage primaires (41) agencés sur la surface périphérique de l'outil de perçage (1) et s'étendant axialement, dans lequel
un chanfrein de guidage secondaire (42) est formé par rapport à au moins l'un des chanfreins de guidage primaires (41), qui s'étend le long de ce chanfrein de guidage primaire (41) et est espacé de celui-ci dans la direction circonférentielle de l'outil de perçage (1), dans lequel une poche de lubrifiant (50) située radialement en retrait par rapport à ces chanfreins de guidage (41, 42) étant formée entre le chanfrein de guidage primaire (41) et le chanfrein de guidage secondaire (42) pour recevoir du lubrifiant de refroidissement,
- la poche de lubrifiant (50) s'ouvre en direction de la surface libre (24) de la pointe de foret (20), dans lequel
- le canal de liquide de refroidissement (12) débouche dans la pointe de foret (20) et est en communication fluidique avec la poche de lubrifiant (50) pour un transfert de lubrifiant de refroidissement depuis le canal de liquide de refroidissement (12) jusque dans la poche de lubrifiant (50), **caractérisé en ce que**
- au moins un canal de liaison (21) est formé au niveau de la pointe de foret (20) entre la poche de lubrifiant (50) et le canal de liquide de refroidissement (12), pour transférer le liquide de refroidissement depuis le canal de liquide de refroidissement (12) jusque dans la poche de lubrifiant (50).

2. Outil de perçage (1) selon la revendication 1, dans lequel la poche de lubrifiant (50) se termine de manière aveugle à une distance de la pointe de foret (20) en direction de la tige de foret (10).

3. Outil de perçage (1) selon la revendication 1 ou 2, dans lequel la section transversale de la poche de lubrifiant (50) diminue en direction de de la tige de foret (10).

4. Outil de perçage (1) selon la revendication 2 ou 3, dans lequel la poche de lubrifiant (50) se termine à une distance de la tige de foret (20) qui correspond à environ 2 à 4 fois le diamètre de l'outil de perçage (1), mais au maximum à la moitié de la longueur de l'extension axiale de la au moins une rainure à copeaux (30).

5. Outil de perçage (1) selon l'une quelconque des revendications précédentes, dans lequel le chanfrein de guidage secondaire (42) est en retrait par rapport au chanfrein de guidage primaire (41) dans une direction radiale.

6. Outil de perçage (1) selon l'une quelconque des revendications précédentes, dans lequel un chanfrein secondaire (44) est formé directement sur le chanfrein de guidage secondaire (42).

7. Outil de perçage (1) selon l'une quelconque des revendications précédentes, dans lequel au moins un canal secondaire (14) part du canal de liquide de refroidissement (12) et débouche directement dans la poche de lubrifiant (50) pour un transfert de lubrifiant de refroidissement depuis le canal de liquide de refroidissement (12) jusque dans la poche de lubrifiant (50).

8. Outil de perçage (1) selon l'une quelconque des revendications précédentes, dans lequel au moins une rainure de lubrification (52) s'étendant transversalement est formée entre la poche de lubrifiant (50) et la rainure à copeaux (30) s'étendant dans la direction circonférentielle adjacente à celle-ci, pour un transfert de lubrifiant de refroidissement depuis la poche de lubrifiant (50) jusque dans la rainure à copeaux (30).

9. Outil de perçage (1) selon la revendication 8, dans lequel plusieurs rainures de lubrification (52) sont formées, qui sont espacées les unes des autres dans l'extension axiale de la rainure à copeaux (30).

10. Outil de perçage (1) selon la revendication 8 ou 9, dans lequel la rainure de lubrification (52) et la rainure à copeaux (30) présentent des directions de rotation opposées.

11. Outil de perçage (1) selon la revendication 10, dans lequel l'angle de rotation de la rainure à copeaux (30) est de 0° à 35° et l'angle de rotation de la rainure de lubrification (52) est de -20° à -70°.

12. Utilisation d'une poche de lubrifiant (50) formée entre un chanfrein de guidage primaire (41) et un chanfrein de guidage secondaire (42) sur un outil de perçage (1) selon l'une quelconque des revendications précédentes pour réduire le frottement et l'usure de l'outil de perçage (1) en raison du frottement latéral entre le foret et la paroi d'alésage.
